# EUROPEAN PATENT SPECIFICATION

(11) **EP 2 035 299 B1**
(45) Date of publication and mention of the grant of the patent: **01.08.2012**
(21) Application number: 07735719.2
(22) Date of filing: 01.05.2007
(51) Int. Cl.: B65D 83/08, B32B 27/00

(54) **CASE OF CONTAINERS OR DISPENSERS WITH A DECORATIVE SLEEVE**
BEHÄLTNIS MIT BEHÄLTERN ODER SPENDERN MIT EINER ZIERHÜLSE
BOITE AVEC DES RECIPIENTS OU DES DISTRIBUTEURS EQUIPES D'UN MANCHON DECORATIF

(30) Priority: 13.06.2006 US 813477 P; 01.12.2006 US 607323
(43) Date of publication of application: 18.03.2009
(73) Proprietor: KIMBERLY-CLARK WORLDWIDE, INC., Neenah, WI 54956 (US)
(72) Inventor: MCDONALD, Duane, Lyle, Neenah, Wisconsin 54956 (US); PITSCH, Raymond, Paul, Appleton, Wisconsin 54915 (US); SCOTTI, Shiva, Nicole, Appleton, Wisconsin 54913 (US); HENDERSON, Cynthia, Watts, Neenah, Wisconsin 54956 (US); MARQUARDT, Allen, Jerry, Appleton, Wisconsin 54913 (US); BAKKEN, Andrew, Peter, Appleton, Wisconsin 54911 (US); SHANNON, Thomas, Gerard, Neenah, Wisconsin 54956 (US); CLARE, Timothy, Patrick, Appleton, Wisconsin 54913 (US)
(74) Representative: Mabey, Katherine Frances
(86) International application number: PCT/IB2007/051615
(87) International publication number: WO 2007/144790

(56) References cited:
- EP-A- 1 053 956
- US-A- 4 581 262
- US-A- 6 020 823
- US-A1- 2003 021 918
- US-A1- 2004 070 222
- US-B1- 6 290 119

## Description

### FIELD OF THE INVENTION

The present invention relates to a case of dispensers or containers each having a sleeve containing a graphic, an image and/or a decorative design.

### BACKGROUND OF THE INVENTION

The outer surfaces of containers or dispensers of products, in particular consumer products, are often provided with graphics, decorative designs informative information or a combination thereof. One example of such containers and dispensers are those containers which are used for dispensing facial tissue. Facial tissue dispensers are often preprinted with graphics, decorative designs and/or informative information for consumers, users and non-users to view. Since these dispensers are generally placed throughout the home, consumers often desire that the dispensers have an aesthetically pleasing design which will blend in with the décor of the consumer's home or place of use. Facial tissue containers or dispensers are generally in the form of a carton, which is typically made from paperboard. These cartons are generally flat upon arrival to the manufacturer or packager of the tissue, formed into a container or dispenser by the tissue manufacturer or packager, and loaded with the facial tissue and sealed by the facial tissue manufacturer or packager. Typically, the cartons arrive at the site of manufacture of the facial tissue or the site of packaging of the facial tissue with the graphics, decorative designs and/or information being already preprinted on the paperboard cartons. While these cartons are very functional in dispensing facial tissue, these cartons are often aesthetically limited and may be aesthetically unappealing to some consumers. As a result, it is often necessary for the manufacturer or packager of these dispensing cartons to produce several different graphic designs to ensure acceptance by a wide variety of consumers. Even with the several different designs being available, consumers as well as retailers are provided with a limited number of designs.

Another method of providing containers or dispensers of consumer products with graphics or informative information is to provide and apply a label to the outer surface of the container or dispenser. Currently, labels which are paper-based or polymeric film-based are being used. While labels may provide the manufacturer or packager of consumer products with an easy way to provide information on a container or dispenser of consumer products, often labels are found to be unattractive by consumers since, in most cases, the label only covers a portion of the outer surface of the container or dispenser or only provide information. As a result, labels are often found to be unattractive to consumers, unless the labels are applied to a container or dispenser with additional graphics or decorative designs being applied to the container or dispenser.

In addition, during particular holidays and seasons of a given calendar year, it may be advantageous for the manufacturer or packager of consumer products to provide products which are seasonal or are related to the particular holiday time of the year. For example, during the spring, it may be desirable to provide to consumers spring related graphics or decorative designs on the containers or dispensers of consumer products, such as flowers. Likewise, during the Christmas season, providing Christmas ornaments or other Christmas related scenes may be advantageous to the manufacturer or packager of the consumer products.

In the prior methods of producing containers or dispensers for consumer products, there is not a way provided which will allow the manufacturer or packager of the consumer products to change the graphics or decorative designs on short notice to meet demands for particular graphics or decorative designs. In the prior methods, the manufacturer typically orders or produces the cartons or dispensers with the graphics or designs prior to loading the consumer product into the container or dispenser. There is a need in the art to provide a container or dispenser of consumer products, which allows the manufacturer or packager a convenient and fast way to provide a wide variety of graphics to retailers and consumers, to meet demands of the consumers. In addition, there is a need in the art to allow a retailer or a consumer to select graphics or decorative designs on containers of consumer products, such as facial tissue, that will meet the desires or needs of the consumer and/or retailer. Further, there is a need in the art to reduce the number of containers in the normal supply chain which have "out-of-date" graphics or designs.

U.S. 2003/0021918A1 discloses a metallized heat shrink label.

The present invention provides a case of articles of manufacture in accordance with claim 1.

### SUMMARY OF THE INVENTION

In one embodiment of the present invention, the outer sheet component of each of the plurality of containers or dispensers has at least two separate layers. In one particular embodiment of the present invention, the outer component has two layers, and these two layers are a first layer and a second layer. The first layer has the graphic, image or decorative design applied thereto and the second layer comprises the shrinkable polymeric film. The first layer may be a polymeric film-based material or paper-based material. In addition the first layer is adjacent the exterior surface of the container or dispenser and the second layer is adjacent the first layer. The second layer serves to protect the first layer and the graphic, image or decorative design imparted to the first layer.

In a different embodiment of the present invention, the shrinkable film has the graphic, image or decorative design applied thereto. In one aspect of this embodiment of the invention, the shrinkable film is printed on an interior side of the film where the interior side of the film is the side of the shrinkable film which is adjacent the container or dispenser sidewall.

In a further embodiment of the present invention, each container or dispenser of the case of the present invention may be prepared from paperboard.

### BRIEF DESCRIPTION OF THE DRAWINGS

FIG 1 shows a cut-away top perspective view of a container or dispenser of the case of the present invention.
FIG 2 shows a top plan view of the container or dispenser component.
FIG 3A and FIG 3B show sectional views of the construction of the bottom and side wall connection of a container or dispenser component.
FIG 4 shows a sectional view of the construction of the top and sidewall of a container or dispenser component.
FIG 5 shows graphics, images or decorative designs imprinted on the interior surface of the shrinkable film.
FIG 6 shows another embodiment which may be used in the present invention where a first layer contains the graphics, images or decorative designs.
FIG 7 shows a method of placing the shrinkable film around the container or dispenser.

### DEFINITIONS

It should be noted that, when employed in the present disclosure, the terms "comprises", "comprising" and other derivatives from the root term "comprise" are intended to be open-ended terms that specify the presence of any stated features, elements, integers, steps, or components, and are not intended to preclude the presence or addition of one or more other features, elements, integers, steps, components, or groups thereof.

As used herein, the terminology such as "vertical", "horizontal", "top", "bottom", "front", "back", "end" and "sides" are referenced according to the views presented. It should be understood, however, that the terms are used only for purposes of description, and are not intended to be used as limitations. Accordingly, orientation of an object or a combination of objects may change without departing from the scope of the invention. As a point of reference for the claims and in the present specification, the term "top" refers to a panel or side of the package with an opening device or opening.

As used herein, the term "blank" in the context of blank containers or blank dispensers is intended to mean a container or dispenser with a portion of at least one surface is not provided with a graphic, image or decorative design, so that a graphic, image or decorative design may be applied to the container or dispenser. A blank may be completely devoid of graphics or have only a portion of the container or dispenser devoid of graphic, images or decorative design. As used herein, the term "blank" means a container or dispenser which does not have the outer sheet component applied thereto.

As used herein, the term "opening" refers to a portion of the top surface which allows a user to access the product housed within the interior volume of the container or dispenser of the present invention.

As used herein, the term "consumer products" is intended to mean products which include durable and non-durable goods which are purchased by or for a user of the products. Consumer products are intended to include, by way of example only, health and hygiene items, including absorbent personal care articles, facial and bath tissue, and dry and wet wipes and the like. The product may be cellulosic based products, meaning that the products contain cellulose fibers.

As used herein, the phrase "absorbent personal care articles" refers to devices which absorb and contain liquids which may be placed against or near the skin to absorb and contain the various liquids discharged from the body. Examples of personal care products include, for example, diapers, training pants, absorbent underpants, adult incontinence products, sanitary wipes and feminine hygiene products such as sanitary napkins and tampons.

The term "disposable" is used herein to describe products that are not intended to be laundered or otherwise restored or reused as an absorbent article after a single use.

As used herein, the term "external side surface" refers to an outer side surface of the container or dispenser which typically faces away from the products which are contained within the container or dispenser. The surface may be a sidewall, a top or bottom of the container or dispenser. Depending on the shape of the container or dispenser, the number of surfaces may be different for each shape. For example, a generally cylindrical or oval carton would have three external surfaces, a continuous side surface, the top surface and the bottom surface. A cubical box would have six external side surfaces, including the top surface, the bottom surface and four sidewall surfaces.

As used herein, the term "container" is intended to mean an article which is capable of holding a product. Also as used herein, the term "dispenser" is intended to mean a container which will also dispense the product from the container.

As used herein, the phrase "graphic, image or decorative design" is intended to cover a wide variety of items which may be placed on the article of manufacture. The term "graphic" is intended to mean features which are generally repeated in a pattern or other features such as a monogram. For example, a repeated pattern of an object is intended to be a graphic. The term "image" generally means a picture, such as a photograph or a painting, but could include other picture-like items such as a silhouette or other similar feature. The term "decorative design" is intended to mean a design which is neither a graphic nor an image per se; however, a decorative design could be the combination of a graphic or pattern.

As used herein, the term "polymer" or "polymeric" generally includes but is not limited to, homopolymers, copolymers, such as for example, block, graft, random and alternating copolymers, terpolymers, etc. and blends and modifications thereof. Furthermore, unless otherwise specifically limited, the term "polymer" shall include all possible geometrical configurations of the material. These configurations include, but are not limited to isotactic, syndiotactic and random symmetries.

### DETAILED DESCRIPTION OF THE INVENTION

In the following detailed description of the present invention, reference is made to the accompanying drawings which form a part hereof, and in which is shown by way of illustration, specific embodiments in which the inventions may be practiced. These embodiments are described in sufficient detail to enable those skilled in the art to practice the invention, and it is to be understood that other embodiments may be utilized and that mechanical, procedural, and other changes may be made without departing from the scope of the present invention. The following detailed description is, therefore, not to be taken in a limiting sense, and the scope of the present invention is defined only by the appended claims.

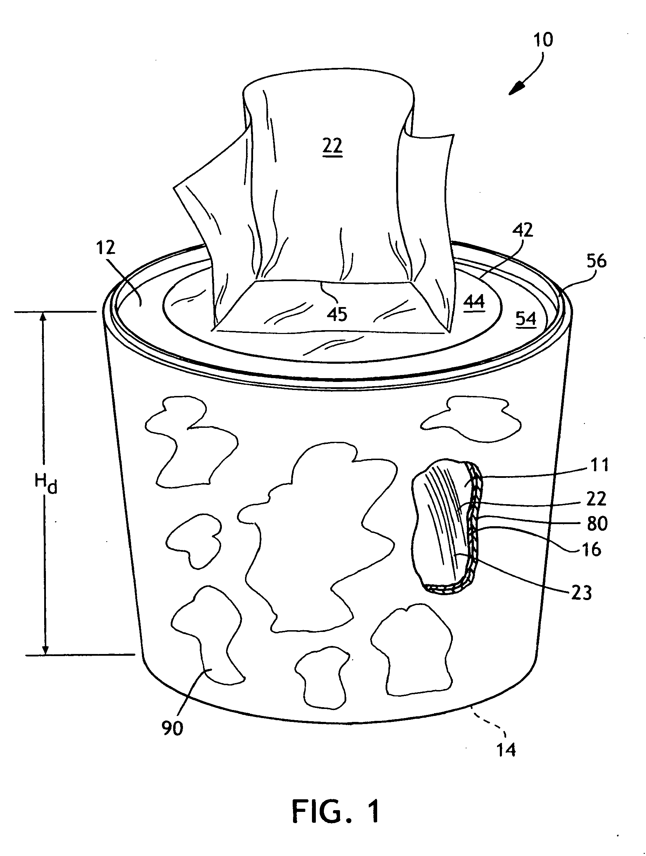

The present invention is directed to a case of articles in accordance with claim 1. Figures 1 to 7 illustrate embodiments of a container or dispenser which may be included in the case of the present invention.

The container or dispenser component of the present invention may be formed in many different shapes and sizes without departing from the scope of the present invention. In the described embodiment of the present invention, the container or dispenser has a generally circular or oval shape. Other shapes may be used for the container of the present invention without departing from the scope of the present invention, including, for example, a cubical container or dispenser, a parallelepiped container or dispenser or other shape which is capable of holding and dispensing products from the container or dispenser component.

To obtain a better understanding of the present invention, attention is directed to FIG 1. Shown in FIG 1 is a container or dispenser 10 which may be used in the case of the present invention. The container or dispenser 10 has a top 12, a bottom 14, and at least one sidewall 16. The sidewall 16 serves to join or connect the top 12 to the bottom 14. The sidewall 16 may be directly or indirectly joined to the top wall and the sidewall 16 may be directly or indirectly joined to the bottom. By "directly joined" it is intended that the top 12 and sidewall 16 or the bottom 14 and sidewall 16 are in direct contact with one another. By "indirectly joined" it is intended that another member or structure is used to join the top 12 to the sidewall 16, or the bottom 14 to the sidewall 16. In addition, the top 12, the bottom 14 and the sidewall 16 forming the container or dispenser 10 also define an interior volume 11 of the container. Located within the interior volume 11 is a product 22, which is shown as a facial tissue product in FIG 1. As is shown in FIG 1, the product 22 may be placed in the interior volume 11 of the dispenser or container 10 such that the product 22 may be dispensed via pop-up dispensing.

The dispenser 10 can further include an opening 42. The opening is normally located in the top 12, but the opening can be optionally located in the sidewall 16 or the bottom 14. The opening 42 allows access to the product 22 stored within the container or dispenser 10. The opening may be a reach-in opening or a dispensing opening. A reach-in opening requires the user to reach into the opening of the container or dispenser to access the product therein. A dispensing opening, which is shown in FIG 1, allows the product 22 inside the container or dispenser 10 to be removed from the container or dispenser without the user reaching into the interior volume of the container or dispenser 10. Typically, dispensing openings require the user to reach into the interior volume of the container or dispenser to feed the first product from the container or dispenser 10. Alternatively, a tab or link (not shown) to the first product in the container or dispenser may be fed through the opening so that the consumer or user can feed the first product without the need to reach into the interior volume 11 to access the first product. Once the first product 22 is fed through the dispensing opening, the next product in a stack of products 23 to be dispensed is positioned within the opening, as shown in FIG 1. This may be accomplished by techniques known to those skilled in the art, such as interleaving the individual products using known folding techniques, such as V-folding, Z-folding and the like. For a description of these folding techniques, attention is directed to U.S. Patent 3,369,700 issued to Nelson.

The dispensing opening 42 can optionally include a dispensing window 44. The dispensing window 44 can be prepared from a suitable material such as a film, nonwoven, or paper material that can retain a partially dispensed product 22, such as a facial tissue, within the opening 42 for pop-up dispensing. The dispensing window can have a dispensing orifice 45 that can be a slit; a curvilinear line; a geometric shape such as an oval, a circle, or a triangle; or an X-shaped, a plus sign shaped or an H-shaped orifice. Alternatively, the dispensing window 44 can be eliminated and fingers or tabs projecting into the dispensing opening 42 can be used to retain a partially dispensed sheet 22.

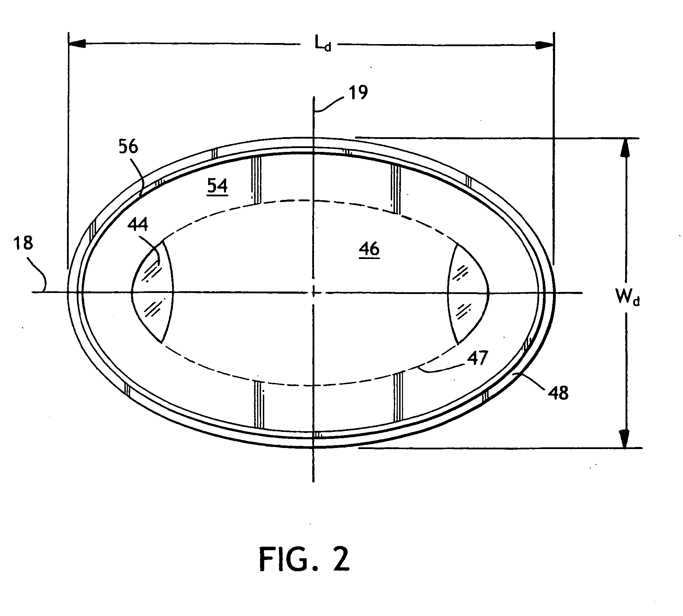

The dispensing opening 42 can be any size or shape such as square, circular, or oval. The opening 42 generally will be larger in size for a reach-in container and smaller in size for a pop-up dispenser. The container or dispenser 10 can further include an optional removable surfboard or cover 46, shown in FIG 2 that can be attached to the dispenser 10 by a perforated or weakened line 47. The removable cover 46 can be used to prevent foreign materials from entering the filled dispenser and provides protection for the more fragile dispensing window 44 during loading and shipping.

The dispenser can be made from suitable materials that include, without limitation, cardboard; carton stock; paper board; thermoplastic materials such as polypropylene, polyethylene, polystyrene, ABS plastic; metal, wood, and glass, amongst other suitable alternatives. In the case of tissues, generally the dispenser is prepared with a carton stock, paper board or a thermoplastic material due to cost and aesthetic value which may be provided by these materials.

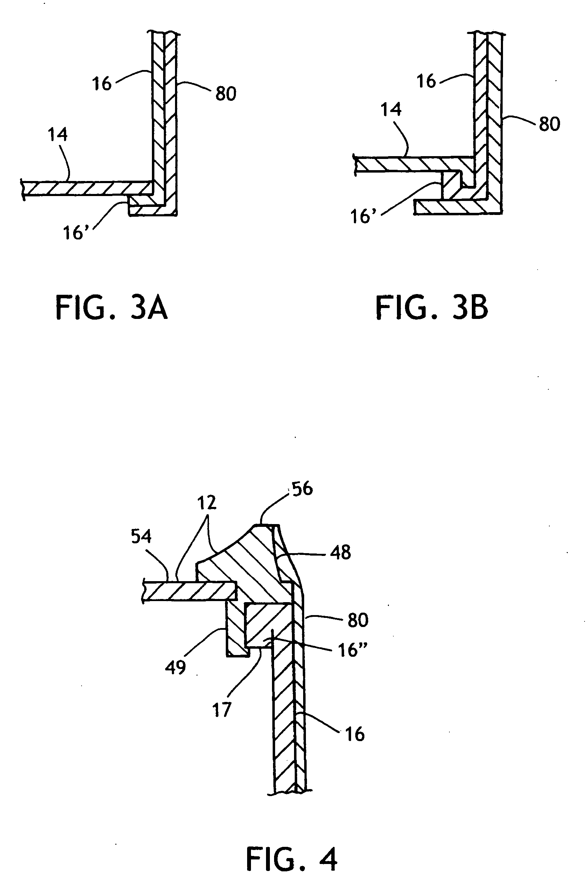

In one embodiment shown in FIG 1, the container or dispenser 10 has a generally oval shape and includes a formed oval sidewall 16 and bottom 14 which may be made from carton stock or paperboard. The bottom 14 can be either essentially even with the lower end of the sidewall 16', as is shown in FIG 3A or recessed from the lower end of the side wall 16', as is shown in FIG 3B. The upper end of the sidewall 16" may be folded over on the inside of the container or dispenser 10 to form an edge or lip 17, as is shown in FIG 4. The container or dispenser 10 includes a snap-in top 12 having an outer ring 48 formed from a plastic material that is molded around a paperboard center portion 54 containing the dispensing opening 42, optional dispensing window 44, and optional removable cover 46. A flange on the outer ring 48 engages with the edge or lip on the interior of the sidewall 16 to secure the top 12 in place, as is shown in FIG 4. If desired, the outer ring 48 can include a stacking lip 56 for use with a recessed bottom 14 to nest or interlock vertically stacked dispensers. Similar tops are described in U.S. Patent application serial number 11/021,317, filed on December 22, 2004.

Alternative methods of constructing the container or dispenser 10 may also be used. For example, a carton blank can be utilized. The carton blank can comprise a plurality of panels that are folded, assembled, and glued to form a dispenser. Injection molding or thermoforming can be used to form the dispenser. Other techniques known to those of skill in the art can be utilized to make the container or dispenser 10.

In one embodiment of the present invention, shown in FIGS 1 and 2, the container or dispenser 10 has an overall height Hd, and overall length, Ld, measured along a longitudinal axis 18, and an overall width, Wd, measured along a transverse axis 19. The dispenser is oblong with the dimension for Ld greater than the dimension for Wd. In the one embodiment, the top and bottom (12, 14) comprise an oval shape and the dispenser has an overall length, Ld, of about 6 inches and an overall width, Wd, of about 10.16 cm (4 inches). This results in an oval container or dispenser 10 that is visually striking and an alternately shaped dispenser compared to the cubical or rectangular (parallelepiped) boxes being currently offered for sale.

In the present invention, the container or dispenser 10 is provided with an outer sheet component 80, which serves to provide a graphics, images or decorative visual effects 90 to the at least one side wall 16. This outer sheet component 80 covers a majority of the exterior surface of the at least one side wall 16. By a majority of the exterior surface, it is intended that at least 50% of the exterior surface area of the exterior surface of the at least one side wall 16 is covered by the outer sheet component. Ideally, the outer sheet component 80 covers at least 75% of the exterior surface area of the sidewall 16 and desirably at least 95% of the exterior surface area of the sidewall 16. In one particular embodiment of the present invention, the outer sheet component 80 covers 100% of the exterior surface of the sidewall 16. The outer sheet component may also extend beyond the side wall 16 to partially or fully cover the top 12 and/or bottom 16.

In the present invention, the outer sheet component 80 may have a single layer or may be multilayered. In either case, at least one layer of the outer sheet component should contain a polymeric film layer and that polymeric film layer should be shrinkable upon the application of heat or energy, such as microwave energy, to the film. Shrinkable films are known to those skilled in the art and can be prepared from a wide variety of polymer resins. Suitable resins which can be used to prepare the shrinkable film layer of the outer sheet component include, but are not limited to, for example, polyolefin resins, polyamide resins, cyclic olefin resins, polyvinyl chloride resins, thermoplastic polyester resins and polystyrene resins. Of these polymeric materials, films prepared from thermoplastic polyester resins and polyvinylchloride resins are generally desired since these resins tend to provide the best desired properties including, for example, transparency, printability, degree of firmness, gloss, and ease of processing. In the present invention, heat-shrinkable films are desirable from the standpoint of ease of use.

Heat-shrinkable films can be prepared by methods known to those skilled in the art and are commercially available. For example, a heat-shrinkable film is typically prepared by heat-stretching in the machine direction a polymeric film prepared from the polymer resins disclosed above. Heat-stretching is stretching of the polymeric film while applying heat to the film. The polymeric film is annealed and cooled in the stretched state and wound onto a roll. When heat or energy is applied to the film, the film will shrink in the direction it was stretched to return towards, but not to its unstretched condition. The heat shrinkage techniques, including temperature and other conditions used in the present invention may be techniques known to those skilled in the art and may be adjusted by suitably selecting the resin ingredients, film thickness, extrusion temperature, draw ratio, take-off temperature, preliminary heating conditions, stretch ratio, stretch rate, stretch temperature, annealing conditions and cooling conditions for film production. Optionally, the film may be stretched in the cross-machine direction as well. In the present invention, heat-shrinkable polymeric films are particularly useable in the present invention due to their ease of use.

In the present invention, the outer sheet component 80 may be a single layer shrinkable film prepared for one or more of the polymer resins described above. Optionally, the outer sheet component 80 may be a multilayer component, provided that one of the layers has a shrinkable film. The additional layers of the sheet component may be other polymeric films, which are also shrinkable. Since the shrinking characteristics of the films may be different, having more than one shrinkable layer may result in differential shrinking of the layers, resulting in an aesthetically undesirable container or dispenser. Therefore, care must be used if more than one shrinkable layer is used in the outer sheet component 80. As a result, it is generally desirable that only a single shrinkable film layer is used in the outer sleeve component of the present invention.

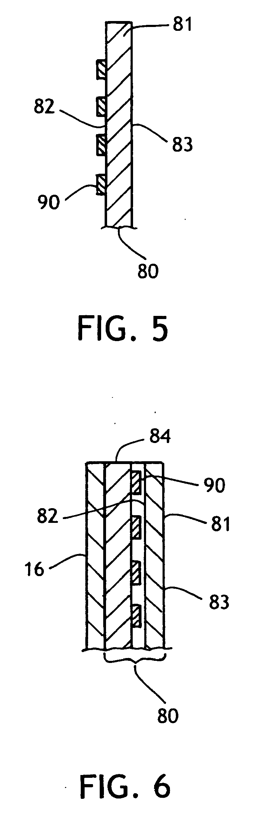

The graphics, images or decorative designs 90 or aesthetically pleasing designs appearing on the container or dispenser 10 of the present invention may be imparted in a number of ways. In one method, the shrinkable film making up the outer sheet component has a graphic, image or decorative design imprinted on one of the surfaces of the shrinkable film of the outer component 80. In this regard, attention is directed to FIG 5. The shrinkable film 81 has an interior surface 82 and an exterior surface 83, wherein the exterior surface forms the outer surface of the article of the present invention and,the interior surface of the shrinkable film faces the exterior surface of the sidewall 16 of the container or dispenser 10. Generally, the shrinkable films are transparent or translucent and do not have any color other than being clear. Alternatively, the shrinkable film may be colored. The graphic, image or decorative design may be coated or imparted to the shrinkable film using methods known to those skilled in the art, including, for example, inkjet printing, gravure printing or flexographic printing. The printing may be completed in a single layer or by printing a series of layers. In addition, a solid color may be applied to the film to provide a base color for the printed graphic, image or decorative design. The graphic, image or decorative design 90 may be imparted on the exterior surface 83 of the shrinkable film or may be imparted on interior surface 82 of the shrinkable film. From a standpoint of durability, it is desirable that the interior 82 surface of the shrinkable film 81 be imparted with the graphic, image or decorative design, as is shown in FIG 5. When the graphic, image or decorative design 90 is on the interior surface 82 of the shrinkable film 81, the shrinkable film 81 will serve to protect the graphic, image or decorative design 90 from damage due to use of the container or dispenser, being contacted with other objects or moving the container or dispenser from one location to another location.

Any type of ink may be used to imprint the shrinkable film, provided that the ink is not susceptible to degradation when heat or energy is applied to the ink. Both metallic and non-metallic inks may be used in the present invention to imprint the film with a graphic, image or decorative design. In addition to conventional inks, inks with special properties, such as, glow in the dark properties, may also be used. Generally, the entire surface of the shrinkable film may be printed; however, it is possible to print only a portion of the film. For example, 50% of the film surface may be printed. Typically, at least 80% or 90% of shrinkable film surface will be printed. Alternatively, a smaller portion of the film may be printed, if desired. For example, a substantially smaller portion of the shrinkable film may be printed, if desired, such as if the desired printing is a monogram or the like.

In addition to placing graphics, images or a decorative design on the container or dispenser, other features may be provided on the container or dispenser. For example, the outside of the surface of the outer sheet component may be imparted with other features, such as a scent, odor control, a texture, an RFID tag or the like. Optionally, the inside surface of the outer sheet component could also be provided with these features

In an alternative embodiment of the present invention, shown in FIG 6, the shrinkable film 81 is not imprinted with a graphic, image or decorative design. Instead, the graphic, image or decorative design layer containing a graphic, image or decorative design 90 is printed onto a first layer 84 which is placed on the outer surface of the side wall 16 of the container or dispenser 10. This first layer 84 may be prepared from a polymeric film material, a paper based material or another similar layer which may be applied to the at least one side wall 16. This first layer 84 may be adhesively mounted to the exterior surface of the side wall 16 or just wrapped around the exterior surface of the side wall and held into place by the shrinkable film 81. In this case, the shrinkable film 81 may be free of graphic, image or decorative designs, or may contain an additional or complementary decorative design. In one particular embodiment of the present invention, the first layer is a printed paper layer and the second layer is the shrinkable polymeric film applied over the first layer.

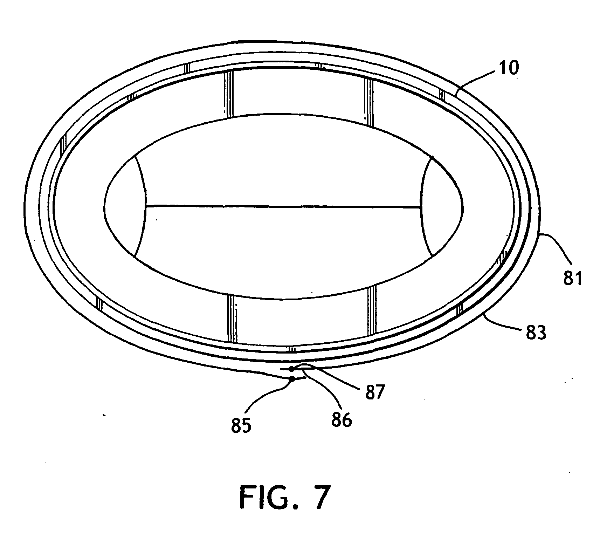

To apply the shrinkable film 81 to the container or dispenser 10 of the present invention, the shrinkable film 81 is wrapped around the container or dispenser, such that the first end 85 of the film contacts and overlaps the second end 86 of the film, as is shown in FIG 7. This results in a shrinkable film with a continuous exterior surface 83. In the area of overlap 87, a means for holding the two ends of the film together is used. The area of overlap 87 could be placed anywhere along the side wall; however, for aesthetic reasons, is it is generally best to place the area of overlap 87, near an edge, if present, or in the case of an oval container or dispenser, in the region of the side wall with the smallest radius of curvature. This will generally prevent the overlap 87 from being visible in the area of the container which is most often viewed by a user, detracting from the aesthetic value of the container or dispenser. Alternatively, in the case of an oval container, as is shown in FIG 7, the overlap area may be placed on the sidewall in an area which has the largest radius of curvature, which may result in a container with a front and a back, with the front being more aesthetically pleasing to a viewer than the back.

The exterior surface 83 of the second end 86 which will be overlapped with the first end 85 may be imparted with an adhesive, a double-stick tape or other means that will effectively hold the interior surface 82, first end 85 and the second end 86 of the shrinkable film 81 together. Alternatively, the interior surface 82 of the first end 85 which will overlap the second end 86 may be imparted with means to hold the two ends together. Generally, if an adhesive is used, the adhesive should be selected from those adhesives that are not adversely affected by the application of heat or energy to the adhesive. Solvent based adhesive may serve well in this application such that the adhesive welds the two ends 85, 86 of the shrinkable films together. Alternatively, the shrinkable film may be formed into a tube-like structure, having a continuous exterior surface, prior to placing the shrinkable film around the container or dispenser 10. In either case, the shrinkable film once brought together should be slightly larger than the circumference of the outer surface of the at least one side wall 16 of the container or dispenser. Generally, the shrinkable film should be 2-10% larger than the circumference of the exterior surface of the at least one side wall 16. If the circumference is any larger than about 10% of the circumference of the container or dispenser 10, then the shrinkable film may not shrink evenly, causing the container or dispenser to have an unappealing surface.

Once the shrinkable film 81 is placed around the exterior surface of the sidewall, then energy is applied to the film to make the shrinkable film shrink and conform to the container or dispenser. For example, if the shrinkable film is a heat-shrinkable film, the heat-shrinkable film 81 is placed around the exterior surface of the sidewall; the film is heated with a suitable heating means, for example, hot air, to shrink the film around the container or dispenser. If the film can be shrunk by other means, the other means, such as microwave energy may also be used. The temperature to which the heat-shrinkable film is heated is dependent on several factors, including the type of polymer used to prepare the heat-shrinkable film or the inks used to prepare the graphic, image or decorative designs on the heat-shrinkable film or otherwise present on the container or dispenser.

In addition to covering the exterior surface of the sidewall 16 of the container or dispenser 10 of the present invention, the shrinkable film may extend beyond the sidewall 16 and partially cover the bottom 14 or top 12. In an embodiment shown in FIGS 3A, 3B and 4, the outer sheet component 80 is a shrinkable film which may extend to the top 12 and the bottom 14 of the container or dispenser of the present invention. By having the shrinkable film extend to the top 12 and bottom 14, the container or dispenser has an overall finished appearance as compared to containers where the shrinkable film only covers a portion of the exterior surface. In the case where the bottom is recessed, as is shown in FIG 3B, the shrinkable film may extend beyond the lower edge 16' of the sidewall. This will result in the bottom edge of the film not contacting the bottom of the container or dispenser, as shown in FIG 3B.

The visual effects achieved by the present invention can be further enhanced by providing the exterior surface of the side wall 16 or the first layer 84 with a base color which will be visible through the imprinted graphic, image or decorative design present on the shrinkable film. In addition, the visual effect can further be enhanced by providing the exterior surface of the sidewall 16 with a material which will produce a three-dimensional effect or produces an actual three dimensional feel. Examples of such materials include metallized films which can be placed between the exterior of the sidewall and the shrinkable film. The metallized films are capable of producing holographic and three dimensional effects. In addition, Fresnel lenses may also be used to enhance the three-dimensional effect of the graphics, images or decorative design imprinted on the shrinkable film. Such metallized films are known in the art. One company having the ability to produce films containing holographic and/or Fresnel lenses is Cobum Graphic Films, Inc., having an office at 1650 Corporate Road West, Lakewood, N.J. 08701. A tissue carton utilizing these films entitled *Decorative Film, Carton, And Method Of Making,* U.S. Ser. No. 10/374,185 filed with the United States Patent Office on Feb. 25, 2003, published as US 2004/0166258 A1 on August 25, 2004.

In the present invention, the graphics, images or decorative designs include a wide a variety of items. For example, objects that are considered decorative in design include flowers, landscapes, cityscapes, pictures of buildings, pictures of people, abstract designs, patterned designs, or other similar graphics or designs. The particular designs provided on the articles of manufacture of the present invention are not critical to the present invention. Generally, however, it is desirable that the graphics, images or decorative designs are not offensive to large groups of people.

In the present invention, the outer sheet component could be made in-line with the packaging of the products into the container or dispenser or the outer sheet component could be prepared off-line.

The container or dispenser 10 can also include an optional removable film overwrap (not shown) to further cover the dispensing opening 42 or outer portion of the dispenser. The film overwrap can be used to display printed information, such as a prominent trademark, size of the sheets, the number of sheets, information on how to open the container or dispenser, or patent information, which can later be removed by the consumer so as to not detract from the graphic, image or decorative design of the container or dispenser imparted by the outer sheet component discussed below. This overwrap is in addition to the outer sheet component 80.

By providing the container or dispenser of the present invention with a graphic, image or design as described above, many benefits are derived. For example, a manufacturer or packager can easily provide particular designs that are popular with a quicker turn around time. Previously, the manufacturer or packager would need to order or produce more containers containing a popular pattern if the supplies of the container became in short supply or, in the alternative store more containers or dispensers with the desired graphics, images or decorative designs. This could result in a delay in producing containers or dispensers with the desired or in-demand graphics, images or decorative design, which in turn would result in a shortage of the desired products with the desired graphics, images or decorative designs. In the present invention, generic or plain containers or dispensers could be produced or ordered which could be modified with the outer component sleeve using the present invention, thereby providing the graphics, images or decorative designs needed.

Other advantages include providing a way for a retailer to order container or dispenser designs it believes would be popular or testing designs in a few select stores prior to placing a large order for a given design. As such, the retailer and manufacturer can easily identify designs which might not be well received by consumers, while identifying others which might be popular. In addition, the present invention provides an easy and economical way to produce short runs of a given design or short runs of seasonal graphics without the need of ordering large quantities of containers or dispensers.

One major advantage provided by the present invention is that a manufacturer or packager could use the present invention to provide a plurality of different graphics, images or decorative designs on essentially identical dispensers or containers. As such, a plurality of "blank" dispensers or containers could be imparted with a variety of graphics, images or decorative designs. Each of the blanks could be the same or may be different. Generally, all of the blanks will be essentially the same with some minor variations therein. As such, in embodiments of the present invention a case containing a plurality of the dispensers or containers is provided, from the plurality of blanks. The dispensers or containers have a plurality of different graphic, image or decorative designs within a given case in accordance with the present invention. Stated another way, the graphics, images or decorative design on at least one of the outer sheet component sleeves is different from the graphics, images or decorative design on at least one other outer sheet component sleeve present in the case of articles. Ideally, there could be two, three, four or more different graphic, image or decorative designs in a given case. In one aspect, each dispenser or container in the case could have a different graphic, image or decorative design, but each blank carton could be the same. This would provide a manufacturer or packager of these dispensers or containers with a way to efficiently provide retailers a variety of designs in a given case of dispensers or containers. As a result, consumers would be provided with a variety of designs to select from at the retail store.

Although the present invention has been described with reference to various embodiments, those skilled in the art will recognize that changes may be made in form and detail without departing from the scope of the invention. As such, it is intended that the foregoing detailed description be regarded as illustrative rather than limiting and that it is the appended claims.

## Claims

1. A case of articles (10) comprising a plurality of articles of manufacture, each of said plurality of articles of manufacture comprising:
a container or dispenser comprising a top (12), at least one sidewall (16), a bottom (14) and an interior volume, wherein the at least one sidewall (16) joins the top to the bottom, and the top, the at least one sidewall and bottom define the interior volume (11) capable of holding at least one product; wherein the at least one sidewall has an exterior surface;
at least one product contained within the interior volume (11);
and an outer sheet component sleeve (80) covering at least a major portion of the exterior surface of the at least one sidewall, said outer sheet component sleeve comprising at least one graphic, image or decorative design (90) located thereon and wherein the outer sheet component comprises at least one shrinkable polymeric film (81);
**characterized in that** each container or dispenser is similar to the other containers or dispensers without the outer sheet component sleeve and each container or dispenser has an outer sheet component sleeve on the exterior surface of the side wall, wherein the graphics, images or decorative design on at least one of the outer sheet component sleeves is different from the graphics, images or decorative design on at least one other outer sheet component sleeve present in the case of articles.

2. The case of articles according to claim 1, wherein the top surface of each container or dispenser comprises an opening, the opening providing a user access to the at least one product contained within the interior volume of the container or dispenser.

3. The case of articles according to claim 1, wherein the container or dispenser comprises a single sidewall, the single side wall having a curvilinear shape, wherein the container or dispenser is substantially free of any corners along the circumference of the single side wall.

4. The case of articles of claim 3, wherein the curvilinear shape of the side wall comprises a generally oval shape.

5. The case of articles according to claim 4, wherein each container or dispenser has a side seam, the side seam being located on a portion of the oval shape with the smallest radius of curvature.

6. The case of articles according to claim 1, wherein each outer sheet component sleeve (80) comprises at least two layers, said two layers comprising a first layer (84) and a second layer (81), said first layer comprising the graphic, image or decorative design (90) applied thereto and the second layer comprises the shrinkable polymeric film.

7. The case of articles according to claim 6, wherein first layer (84) is adjacent the exterior surface of the container or dispenser and the second layer (81) is adjacent the first layer.

8. The case of articles according to claim 7, wherein the first layer (84) comprises a paper based material.

9. The case of articles according to claim 1, wherein the shrinkable polymeric film of each container or dispenser comprises the graphic, image or decorative design (90) printed thereon.

10. The case of articles according to claim 9, wherein the shrinkable polymeric film (81) comprises an interior surface and an exterior surface, wherein the interior surface of the shrinkable polymeric film (81) is adjacent the exterior surface of the sidewall, and the interior surface of the shrinkable polymeric film comprises the graphic, image or decorative design applied thereto.

11. The case of articles according to claim 1, wherein the shrinkable film is a heat-shrinkable film.

12. The case of articles according to claim 1, wherein the graphics, images or decorative design on at least two of the outer sheet component sleeves are different from the graphics, images or decorative design on at least one other outer sheet component sleeve present in the case of articles.

13. The case of articles of any preceding claim, wherein the case is a case of facial tissue dispensers, each of said plurality of articles of manufacture being a facial tissue dispenser comprising a dispenser, the at least one product contained within the interior volume of each dispenser being a plurality of facial tissues disposed within the interior volume.

## Patentansprüche

1. Artikelkasten (10), welcher eine Vielzahl von hergestellten Artikeln umfasst, wobei jeder aus der Vielzahl von hergestellten Artikeln umfasst:
einen Behälter oder Spender, welcher eine Oberseite (12), mindestens eine Seitenwand (16), einen Boden (14) und ein Innenvolumen umfasst, wobei die mindestens eine Seitenwand (16) die Oberseite mit dem Boden verbindet, und wobei die Oberseite, die mindestens eine Seitenwand und der Boden das Innenvolumen (11) definieren, welches mindestens ein Produkt aufnehmen kann; wobei die mindestens eine Seitenwand eine Außenoberfläche aufweist;
wobei mindestens ein Produkt in dem Innenvolumen (11) enthalten ist;
und eine Außenschichtkomponentenhülle (80), die zumindest einen Hauptanteil der Außenoberfläche der mindestens einen Seitenwand abdeckt, wobei die Außenschichtkomponentenhülle mindestens eine Graphik, ein Bild oder ein dekoratives Design (90) umfasst, welches darauf angeordnet ist, und wobei die Außenschichtkomponente mindestens einen schrumpfbaren Polymerfilm (81) umfasst;
**dadurch gekennzeichnet, dass** jeder Behälter oder Spender den anderen Behältern oder Spendern gleicht bis auf die Außenschichtkomponentenhülle, und wobei jeder Behälter oder Spender eine Außenschichtkomponentenhülle auf der Außenseite der Seitenwand aufweist, wobei die Graphiken, Bilder oder dekorativen Designs auf mindestens einer der Außenschichtkomponentenhüllen verschieden ist von den Graphiken, Bildern oder dekorativen Designs auf mindestens einer anderen Außenschichtkomponentenhüllen, welche in dem Artikelkasten vorhanden sind.

2. Artikelkasten gemäß Anspruch 1, wobei die Oberseitenoberfläche jedes Behälters oder Spenders eine Öffnung umfasst, wobei die Öffnung dem Benutzer Zugriff zu dem mindestens einen Produkt ermöglicht, welches in dem Innenvolumen des Behälters oder Spenders enthalten ist.

3. Artikelkasten gemäß Anspruch 1, wobei der Behälter oder Spender eine einzelne Seitenwand umfasst, wobei die einzelne Seitenwand eine gebogene Form aufweist, wobei der Behälter oder Spender im Wesentlichen frei ist von Ecken entlang des Umfangs der einzelnen Seitenwand.

4. Artikelkasten gemäß Anspruch 3, wobei die gebogene Form der Seitenwand eine im Allgemeinen ovale Form aufweist.

5. Artikelkasten gemäß Anspruch 4, wobei jeder Behälter oder Spender eine Seitennaht aufweist, wobei die Seitennaht auf einem Teil der ovalen Form mit dem geringsten Kurvenradius angeordnet ist.

6. Artikelkasten gemäß Anspruch 1, wobei jede Außenschichtkomponentenhülle (80) mindestens zwei Schichten umfasst, wobei die zwei Schichten eine erste Schicht (84) und eine zweite Schicht (81) umfassen, wobei die erste Schicht eine Graphik, ein Bild oder ein dekoratives Design (90) umfasst, welches darauf aufgebracht ist, und wobei die zweite Schicht den schrumpfbaren Polymerfilm umfasst.

7. Artikelkasten gemäß Anspruch 6, wobei die erste Schicht (84) angrenzend ist an die Außenoberfläche des Behälters oder Spenders und wobei die zweite Schicht (81) angrenzend an die erste Schicht ist.

8. Artikelkasten gemäß Anspruch 7, wobei die erste Schicht (84) ein Papier basiertes Material umfasst.

9. Artikelkasten gemäß Anspruch 1, wobei der schrumpfbare Polymerfilm jedes Behälters oder Spenders die Graphik, das Bild oder das dekorative Design (90) darauf aufgedruckt aufweist.

10. Artikelkasten gemäß Anspruch 9, wobei der schrumpfbare Polymerfilm (81) eine Innenoberfläche und eine Außenoberfläche umfasst, wobei die Innenoberfläche des schrumpfbaren Polymerfilms (81) angrenzend ist an die Außenoberfläche der Seitenwand, und wobei die Innenoberfläche des schrumpfbaren Polymerfilms die Graphik, das Bild oder das dekorative Design darauf aufgebracht aufweist.

11. Artikelkasten gemäß Anspruch 1, wobei der schrumpfbare Film ein durch Wärme schrumpfbarer Film ist.

12. Artikelkasten gemäß Anspruch 1, wobei die Graphiken, die Bilder oder die dekorativen Designs auf mindestens zwei der Außenschichtkomponentenhüllen verschieden sind von den Graphiken, Bildern oder dekorativen Designs auf mindestens einer anderen Außenschichtkomponentenhüllen, die in dem Artikelkasten vorhanden ist.

13. Artikelkasten gemäß einem der vorherigen Ansprüche, wobei der Kasten ein Gesichtstuchspenderkasten ist, wobei jeder der Vielzahl von hergestellten Artikeln ein Gesichtstuchspender ist, welcher einen Spender umfasst, wobei das mindestens eine Produkt, welches in dem Innenvolumen von jedem Spender enthalten ist, eine Vielzahl von Gesichtstüchern ist, die in dem Innenvolumen angeordnet sind.

## Revendications

1. Boîte d'articles (10) comprenant une pluralité d'articles manufacturés, chacun de ladite pluralité d'articles manufacturés comprenant :
un conteneur ou un distributeur comprenant un dessus (12), au moins une paroi latérale (16), un fond (14) et un volume intérieur, dans lequel la au moins une paroi latérale (16) unit le dessus au fond, et le dessus, la au moins une paroi latérale et le fond définissent le volume intérieur (11) capable de contenir au moins un produit ; dans laquelle la au moins une paroi latérale a une surface extérieure ;
au moins un produit contenu dans le volume intérieur (11) ;
et un manchon de composant extérieur en feuille (80) recouvrant au moins une majeure partie de la surface extérieure de la au moins une paroi latérale, ledit manchon de composant extérieur en feuille comprenant au moins un graphique, une image ou un motif décoratif (90) situé sur celui-ci et dans laquelle le composant extérieur en feuille comprend au moins un film polymère rétractable (81) ;
**caractérisée en ce que** chaque conteneur ou distributeur est similaire aux autres conteneurs ou distributeurs sans le manchon de composant extérieur en feuille et chaque conteneur ou distributeur a un manchon de composant extérieur en feuille sur la surface extérieure de la paroi latérale, dans laquelle les graphiques, les images ou le motif décoratif sur au moins un des manchons de composant extérieur en feuille sont différents des graphiques, des images ou du motif décoratif sur au moins un autre manchon de composant extérieur en feuille présent dans la boîte d'articles.

2. Boîte d'articles selon la revendication 1, dans laquelle la surface supérieure de chaque conteneur ou distributeur comprend une ouverture, l'ouverture donnant accès à un utilisateur au au moins un produit contenu dans le volume intérieur du conteneur ou distributeur.

3. Boîte d'articles selon la revendication 1, dans laquelle le conteneur ou distributeur comprend une paroi latérale unique, la paroi latérale unique ayant une forme curviligne, dans laquelle le conteneur ou distributeur est sensiblement exempt de tout coin le long de la circonférence de la paroi latérale unique.

4. Boîte d'articles selon la revendication 3, dans laquelle la forme curviligne de la paroi latérale comprend une forme généralement ovale.

5. Boîte d'articles selon la revendication 4, dans laquelle chaque conteneur ou distributeur a une jonction latérale, la jonction latérale étant située sur une partie de la forme ovale ayant le plus petit rayon de courbure.

6. Boîte d'articles selon la revendication 1, dans laquelle chaque manchon de composant extérieur en feuille (80) comprend au moins deux couches, lesdites deux couches comprenant une première couche (84) et une seconde couche (81), ladite première couche comprenant le graphique, l'image ou le motif décoratif (90) appliqué sur celle-ci et la seconde couche comprend le film polymère rétractable.

7. Boîte d'articles selon la revendication 6, dans laquelle la première couche (84) est adjacente à la surface extérieure du conteneur ou distributeur et la seconde couche (81) est adjacente à la première couche.

8. Boîte d'articles selon la revendication 7, dans laquelle la première couche (84) comprend un matériau à base de papier.

9. Boîte d'articles selon la revendication 1, dans laquelle le film polymère rétractable de chaque conteneur ou distributeur comprend le graphique, l'image ou le motif décoratif (90) imprimé sur celui-ci.

10. Boîte d'articles selon la revendication 9, dans laquelle le film polymère rétractable (81) comprend une surface intérieure et une surface extérieure, dans laquelle la surface intérieure du film polymère rétractable (81) est adjacente à la surface extérieure de la paroi latérale, et la surface intérieure du film polymère rétractable comprend le graphique, l'image ou le motif décoratif appliqué sur celle-ci.

11. Boîte d'articles selon la revendication 1, dans laquelle le film rétractable est un film thermorétractable.

12. Boîte d'articles selon la revendication 1, dans laquelle les graphiques, les images ou le motif décoratif sur au moins deux des manchons de composant extérieur en feuille sont différents des graphiques, des images ou du motif décoratif sur au moins un autre manchon de composant extérieur en feuille présent dans la boîte d'articles.

13. Boîte d'articles selon l'une quelconque des revendications précédentes, dans laquelle la boîte est une boîte de distributeur de mouchoirs en papier, chacun de ladite pluralité d'articles manufacturés étant un distributeur de mouchoirs en papier comprenant un distributeur, le au moins un produit contenu dans le volume intérieur de chaque distributeur étant une pluralité de mouchoirs en papier disposés dans le volume intérieur.
